# EUROPÄISCHE PATENTANMELDUNG

(11) **EP 0 921 399 A1**
(43) Veröffentlichungstag der Anmeldung: **09.06.1999**
(21) Anmeldenummer: 98122657.4
(22) Anmeldetag: 28.11.1998
(51) Int. Cl.: G01P 3/44, G01P 13/04

(54) **Vorrichtung zur Drehzahlmessung an Wälzlagern**

(30) Priorität: 03.12.1997 DE 19753583
(71) Anmelder: FAG OEM und Handel AG, 97421 Schweinfurt (DE)
(72) Erfinder: Grehn, Martin, 97456 Dittelbrunn (DE); Van der Knokke, Henri, 97464 Niederwerrn (DE)

(57) **Zusammenfassung**

Damit sich bei einer Vorrichtung zur Drehzahlmessung eine betriebssichere, kompakte aber trotzdem einfache Ausführung ergibt, ist das Wälzlager (1) mit mindestens einer zweiten unabhängig arbeitenden Sensoreinheit (5) versehen.

## Beschreibung

Die Erfindung bezieht sich auf eine Vorrichtung nach dem Oberbegriff des Anspruchs 1.

Vorrichtungen zur Drehzahlmessungen an Wälzlagern sind schon bekannt. So wird in der FAG-Broschüre T. Nr. WL 43-1206 D 97/3/97 ein Rillenkugellager mit integriertem Sensor gezeigt. Hiermit soll die jeweilige Drehzahl und Drehrichtung erfaßt und entsprechende Signale zur Verfügung gestellt werden. Da im Falle des Versagens der Sensoreinheit oder eines ihrer Bauteile die Messung nicht möglich oder fehlerhaft ist, ist diese Lösung in sicherheitsrelevanten Anwendungen nicht brauchbar. Nun wurde in der DE-PS 195 10 717 der Vorschlag gemacht zwei Sensoren zu benutzen. Hier werden diese aber in zwei verschiedene Lager eingebaut. Dabei handelt es sich um eine aufwendige Lösung, da zwei Lager benötigt werden. Weiterhin werden die konstruktiven Möglichkeiten durch den hohen Platzbedarf eingeschränkt. Außerdem können durch die nicht fixe Verbindung der beiden Sensorlager Signalunterschiede und Fehlinterpretationen entstehen.

Es ist daher Aufgabe dieser Erfindung eine Vorrichtung aufzuzeigen, die diese Nachteile nicht aufweist und insbesondere eine betriebssichere, kompakte aber trotzdem einfache Sensorlagerung ergibt.

Die Lösung ist im kennzeichnenden Teil des Anspruchs 1 angegeben. Die Ansprüche 2 und 3 enthalten spezielle Ausgestaltungen.

Dadurch, daß zwei Sensoreinheiten bestehend aus Impulsgeber und Sensor an einem Lager befestigt werden, ergibt sich zunächst eine kompakte Einheit, die auch kostengünstig ist. Die konstruktive Freiheiten durch die redundante Sensoreinheit sind dadurch deutlich größer. Die gewünschte doppelte Messung ist sehr zuverlässig, denn durch die fixe mechanische Verbindung zwischen Lager und Sensorteile werden Signalunterschiede und Fehlinterpretationen vermieden.

Die Erfindung wird anhand einer Figur näher erläutert. Diese zeigt einen Längsschnitt durch die erfindungsgemäßen Vorrichtung.

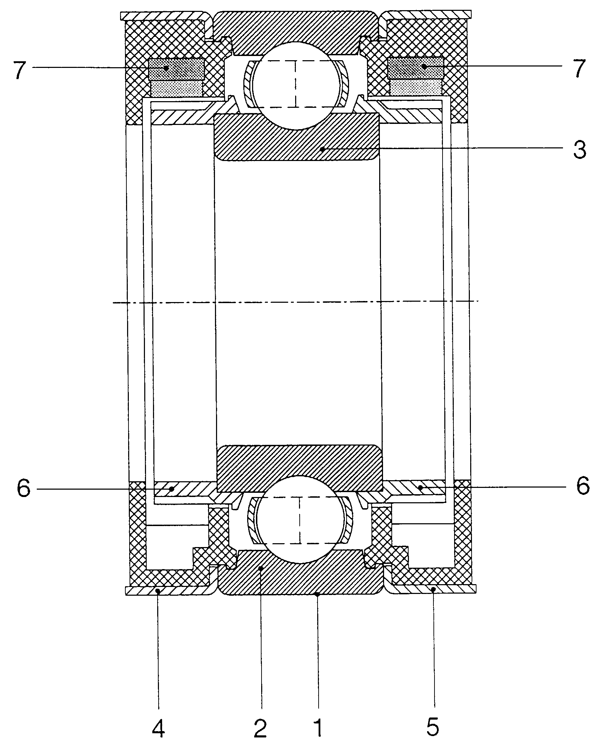

Wie die Figur zeigt, sind an einem normalen, auf einer nicht gezeigten Welle sitzenden Kugellager 1 mit den Laufringen 2 und 3 an beiden Stirnseiten des Lagers Sensoreinheiten 4 und 5 befestigt. Dadurch ergibt sich eine einfache und kompakte Sensorlagerung, mit deren Hilfe eine betriebssichere Ermittlung der Drehzahl und/oder Drehrichtung möglich ist. Es ist nämlich nur die unbedingt erforderliche Zahl von Einzelteilen vorhanden, und zwar ein einziges normales Kugellager 1 und jeweils ein identischer Impulsgeberring 6 und Sensor 7 auf beiden Seiten des Lagers 1. Da die Impulsgeberringe 6 kraftschlüssig auf dem Innenring 3 und die Sensoren 7 formschlüssig am Außenring 2 befestigt sind, ergibt sich auch eine Baueinheit. Die dadurch erreichte gute Befestigung verbindet beide Sensoren zu einer Einheit und vermeidet Interpretationsfehler infolge von Signaldifferenzen.

## Patentansprüche

1. Vorrichtung zur Drehzahlmessung und/oder Drehrichtungserkennung oder ähnliches an rotierenden Wellen in einem Wälzlager mit integriertem Impulsgebering und Sensor, dadurch gekennzeichnet, daß das Wälzlager (1) mit mindestens einer zweiten unabhängig arbeitenden Sensoreinheit (5) versehen ist.

2. Vorrichtung nach Anspruch 1, dadurch gekennzeichnet, daß an den beiden Stirnseiten des Wälzlagers (1) je eine Sensoreinheit (4, 5) angebracht ist.

3. Vorrichtung nach Anspruch 1 oder 2, dadurch gekennzeichnet, daß die Impulsringe (6) und Sensorteile (7) kraft- und/oder formschlüssig mit den Laufringen (2, 3) eines einzelnen Wälzlagers (1) verbunden sind.
